# EUROPEAN PATENT APPLICATION

(11) **EP 4 467 824 A1**
(43) Date of publication of application: **27.11.2024**
(21) Application number: 22920744.4
(22) Date of filing: 21.07.2022
(51) Int. Cl.: F16B 39/14, F16B 39/20

(54) **ANTI-LOOSENING SPRING NUT**

(30) Priority: 17.01.2022 KR 20220006833
(71) Applicant: Moon, Sangyeol, Incheon 23014 (KR)
(72) Inventor: Moon, Sangyeol, Incheon 23014 (KR)
(74) Representative: Petraz, Gilberto Luigi
(86) International application number: PCT/KR2022/010708
(87) International publication number: WO 2023/136411

(57) **Abstract**

The present invention relates to an anti-loosening spring nut which is coupled to the lower portion of a nut (20) fastened to a bolt (10) so as to prevent the nut (20) from loosening, the anti-loosening spring nut comprising: a spring female screw (120) which is wound along a male thread of the bolt (10) multiple times and has a lower locking ring (123) and an upper locking ring (121) which respectively protrude in different directions radially outward at a lower end and an upper end; and an outer casing (110) which has the shape of an enclosure in which the spring female screw (120) is accommodated, and wherein a bolt insertion hole (111a) into which the bolt (10) is inserted is formed through a bottom plate (111), and along a side surface, a plurality of pushing jaws (114) are recessedly formed at regular intervals toward the inside, wherein the spring female screw (120) is accommodated inside the outer casing (110) such that the pushing jaws (114) are disposed between the lower locking ring (123) and the upper locking ring (121), and in a state in which the nut (20) is fastened to the bolt (10), when a rotational force is applied by a standard tool in the direction in which the outer casing (110) is fastened to the bolt (10), the pushing jaws (114) contact and press the upper locking ring (121) so as to expand the outer diameter of the spring female screw (120), and the outer casing (110) and the spring female screw (120) are rotated together and fastened along the bolt (10).

## Description

### Technical Field

The present invention relates to an anti-loosening spring nut. More specifically, the present invention relates to an anti-loosening spring nut which is fastened using standard tools to a bottom portion of a nut fastened to a bolt, to prevent loosening of the nut.

### Background Art

Typically, a bolt and nut are fastened to couple two objects in various fields, such as assembly of automotive components, assembly of electronic components, assembly of furniture, and assembly of structures at construction sites. However, such fastened bolts and nuts have a problem in that they come to be loosened due to external impact or vibration from vehicle operation, resulting in accidents.

In particular, with increasing numbers of electronic devices being installed in automobiles and general industrial machinery, etc. in recent times, high current and high voltage have come to be required. Here, there is a problem of the possibility of fire due to sparks or accidents due to loss of power to the electronic device if a fastening of a bolt and nut at a power connection becomes loose.

To prevent such loosening of a nut, an anti-loosening female threaded spring formed by winding to correspond to the male threads of the bolt is used. The anti-loosening female threaded spring is provided to be inserted into the male threads when the male threads of the bolt are right-hand threads.

The anti-loosening female threaded spring enters along the male threads of the bolt to become screw-coupled, and when the bolt is about to become unfastened, the outer diameter of the anti-loosening female threaded spring is reduced, applying friction to the male threads and preventing the loosening of the bolt.

However, such anti-loosening female threaded spring has the form of a spring that is wound a certain number of times to have an outer diameter corresponding to that of the male threads of the bolt, thus has the limitation of not being able to be fastened to a bolt using standard tools in the field.

Accordingly, there is the inconvenience that the anti-loosening female threaded spring must be fastened by hand to the bolt by a worker, or must be designed to be incorporated within the nut.

[Prior Art Literature] Korean Patent No. 10-1907342 "Lock Nut" (issued on October 11, 2018)

### Detailed Description of the Invention

### Technical Problem

A purpose of the present invention, devised to solve the problems described in the above, is to provide an anti-loosening spring nut which can be fastened quickly to a bolt using standard tools while maintaining the anti-loosening function of a conventional female-threaded spring.

Another purpose of the present invention is to provide an anti-loosening spring nut which spins without traction once coupled to a bottom portion of a nut fastened to a bolt using a standard tool, thereby improving tool adaptability.

The above-stated purposes and various advantages of the present invention will become further evident to persons skilled in the art through preferred embodiments of the present invention.

### Technical Solution

The purpose(s) of the present invention may be achieved by means of an anti-loosening spring nut, which is coupled to a bottom portion of a nut 20 fastened to a bolt 10, to prevent loosening of the nut 20. The anti-loosening spring nut according to the present invention comprises: female thread spring 120 which is wound a certain number of times along male threads of a bolt 10, and at whose lower portion and upper portion are projectingly formed, respectively, a lower catching loop end 123 and an upper catching loop end 121, at directions different from each other and outward in a radial direction, and; an external casing 110 which has a shape of an enclosure accommodating the female thread spring 120, on a bottom plate 111 of which is penetratingly formed a bolt insertion hole 111a into which the bolt 10 is inserted, and along whose side face 113 are provided a plurality of pushing projections 114 which are depressedly formed inward at constant intervals, and is characterized: in that the female thread spring 120 is accommodated within the external casing 110 in a manner such that the pushing projection 114 is disposed between the lower catching loop end 123 and the upper catching loop end 121, and; in that when, with the nut 20 fastened to the bolt 10, torque is applied by a standard tool in a direction wherein the external casing 110 becomes fastened to the bolt 10, the pushing projection 114 comes in contact with and presses against the upper catching loop end 121, expanding an outer diameter of the female thread spring 120 and causing the external casing 110 and the female thread spring 120 to rotate together and become fastened to each other along the bolt 10.

According to a first embodiment, the external casing 110 comprises: a side face 113 whose cross-section is formed in a polygonal shape to allow for use of a standard tool, and; a plurality of covering wings 115 which are folded inward from an upper edge of the side face 113 to cover the female thread spring 120, and is characterized in that: the plurality of pushing projections 114 is formed depressedly inwards from each of the edge faces of the polygon, to a depth at which they cause the female thread spring 120 to become aligned at a center of the external casing 110, so that the female thread spring 120 may be screw-coupled to the male threads of the bolt 10.

According to a first embodiment, when an external force is applied in a direction in which the bolt 10 or the nut 20 is loosened with the external casing 110 coupled to the bolt 10 beneath the nut 20, the upper catching loop end 121 comes into contact with the pushing projections 114 with the external casing 110 secured in place, reducing the outer diameter of the female thread spring 120 and preventing loosening of the bolt 10 or the nut 20.

Meanwhile, the purpose(s) of the present invention may be achieved by means of an anti-loosening nut which is fastened beneath a nut 20 fastened to a bolt 10 to prevent loosening of the nut 20. The anti-loosening spring nut of the present invention comprises: a female thread spring 120 which is wound a certain number of times along male threads of the bolt 10, and at whose lower portion and upper portion are projectingly formed, respectively, a lower catching loop end 123 and an upper catching loop end 121, at directions different from each other and outward in a radial direction; a ratchet external casing 110a which has a shape of an enclosure accommodating the female thread spring 120, on a bottom plate 111 of which is penetratingly formed a hub insertion hole 111a-1 having an external diameter greater than the external diameter of the bolt 10, and along whose side face 113 are provided a plurality of short pushing projections 114-1 which are depressedly formed inward at constant intervals, and; an internal casing 130 which is accommodated within the ratchet external casing 110a and which accommodates the female thread spring 120, and along whose side face 113 are provided a plurality of receiving projections 132 which are depressedly formed inward at intervals corresponding to the short pushing projections 114-1, and is characterized in that: the female thread spring 120 is accommodated within the internal casing 130 in a manner such that the receiving projection 132 is disposed between the lower catching loop end 123 and the upper catching loop end 121, and; in that when, with the nut 20 fastened to the bolt 10, torque is applied by a standard tool in a direction wherein the external casing 110 becomes fastened to the bottom of the nut 20, the short pushing projection 114-1 presses against the receiving projection 132, and the receiving projection 132 comes in contact with and presses against the upper catching loop end 121, expanding an outer diameter of the female thread spring 120 and causing the female thread spring 120 to become fastened to the bolt 10.

According to a second embodiment, the internal casing 130 comprises: an internal casing wall 131 on which the plurality of receiving projections 132 is formed; a bearing floor plate 133 which is formed to project inward by a certain distance from the wall of the internal casing 130 in a direction parallel to the bottom edge of the wall to overlap the bottom plate 111, and; a projecting hub 133a which is formed to project inward by a certain distance from the bearing floor plate 133 and project downward and outward through the hub insertion hole 111a-1, and on which is formed an internal bolt insertion hole 133c into which the bolt 10 is inserted, and is characterized in that: the receiving projection 132 is formed depressedly inwards to a depth at which it causes the female thread spring 120 to become aligned at a center of the internal casing 130, so that the female thread spring 120 becomes screw-coupled to the male threads of the bolt 10.

According to the second embodiment, when a standard tool applies torque in a direction in which the nut 20 becomes fastened to the external casing 110 with the projecting hub 133a in contact with the bottom of the nut 20 fastened to the bolt 10, the short pushing projection 114-1 passes over the receiving projection 132, causing the external casing 110 to spin without traction about the projecting hub 133a and around the internal casing 130.

### Benefit(s) of the Invention

In the anti-loosening spring nut according to the present invention, a female thread spring used to prevent loosening of a bolt is accommodated within an external casing which may be manipulated using a standard tool, and a pushing projection formed on an inner wall face thereof presses against an upper catching loop end and a lower catching loop end of the female thread spring to cause the female thread spring to become fastened to or loosened from a bolt.

By virtue of this arrangement, the present invention has the advantage of being able to be fastened quickly to a bolt using a standard tool while maintaining the anti-loosening function of a female thread spring.

Further, the anti-loosening spring nut of the present invention provides a ratchet function by adding an internal casing and providing a receiving projection which is pushed against by a pushing projection, causing the external casing to spin without traction once the anti-loosening spring nut has been fastened beneath the nut. By virtue of this arrangement, the present invention has enhanced adaptability to standard tools, providing the benefit of faster installation.

### Brief Description of the Drawings

FIG. 1 is a skew drawing illustrating the anti-loosening spring nut according to a preferred embodiment of the present invention, fastened to a bolt together with a nut,
FIG. 2 is a skew drawing illustrating the elements of the anti-loosening spring nut according to a preferred embodiment of the present invention,
FIG. 3 is an exploded skew drawing illustrating separately the elements of the anti-loosening spring nut according to a preferred embodiment of the present invention,
FIG. 4 is a side section illustrating the cross section of the anti-loosening spring nut according to a preferred embodiment of the present invention when fastened to a bolt together with a nut,
FIG. 5 is an exemplary plan drawing illustrating the acting mechanism of the anti-loosening spring nut according to a preferred embodiment of the present invention,
FIG. 6 is an exemplary drawing illustrating various modifications of the anti-loosening spring nut according to a preferred embodiment of the present invention,
FIG. 7 is an exploded skew drawing illustrating separately the elements of the anti-loosening spring nut according to a second embodiment of the present invention,
FIG. 8 is a side section illustrating the cross section of the anti-loosening spring nut according to a second embodiment of the present invention when fastened to a bolt together with a nut, and
FIG. 9 and FIG. 10 are exemplary plan drawings illustrating the acting mechanism of the anti-loosening spring nut according to a second embodiment of the present invention.

### Best Mode(s) for Carrying Out the Invention

To facilitate sufficient comprehension of the present invention, preferred embodiments of the present invention are described in the following with reference to the attached drawings. The embodiments of the present invention may be modified into various forms, and the scope of the present invention shall not be interpreted as being limited to the embodiments described in detail in the following. These embodiments are provided to describe the present invention more completely to a person having ordinary skill in the art. Accordingly, the shapes, etc. of elements in the drawings may be exaggerated for emphasis so as to describe the present invention more accurately. It shall be noted that in some cases, like members are illustrated with like reference symbols across the drawings. Detailed description of known functions and elements which may unnecessarily cloud the gist of the present invention shall be omitted.

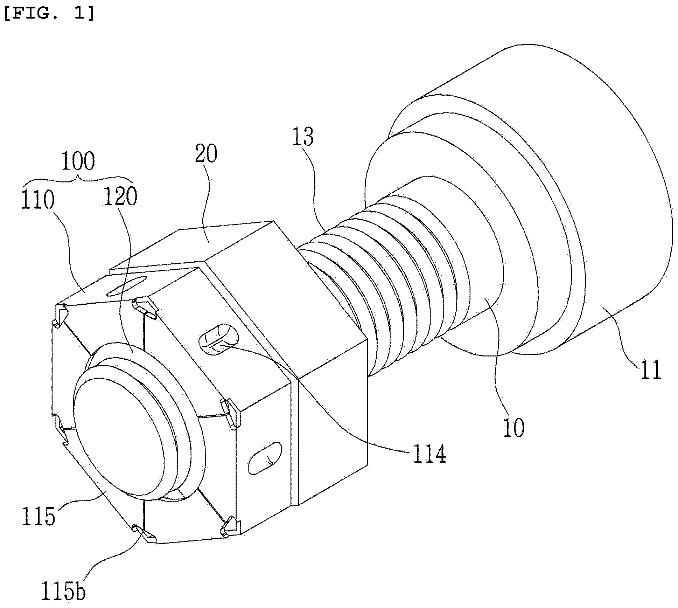

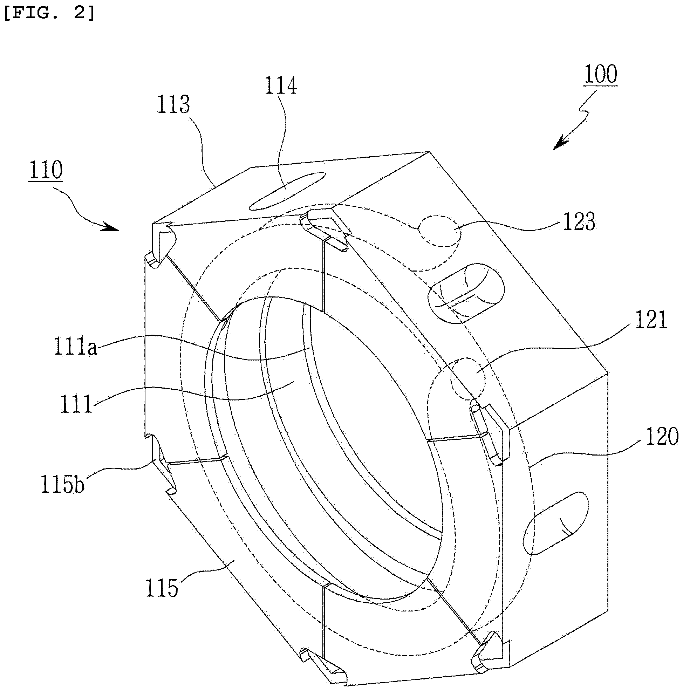

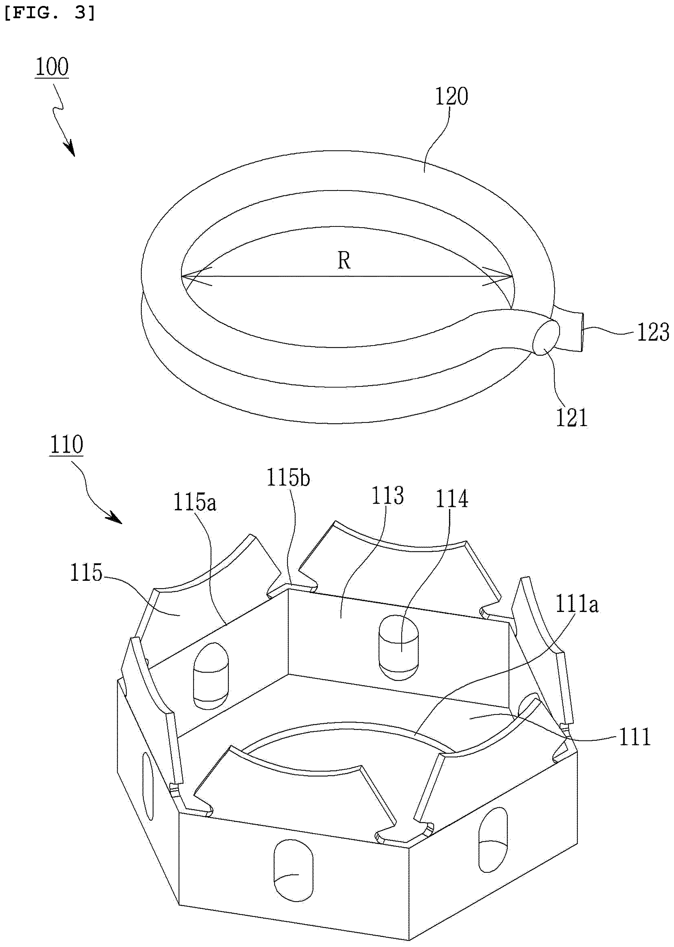

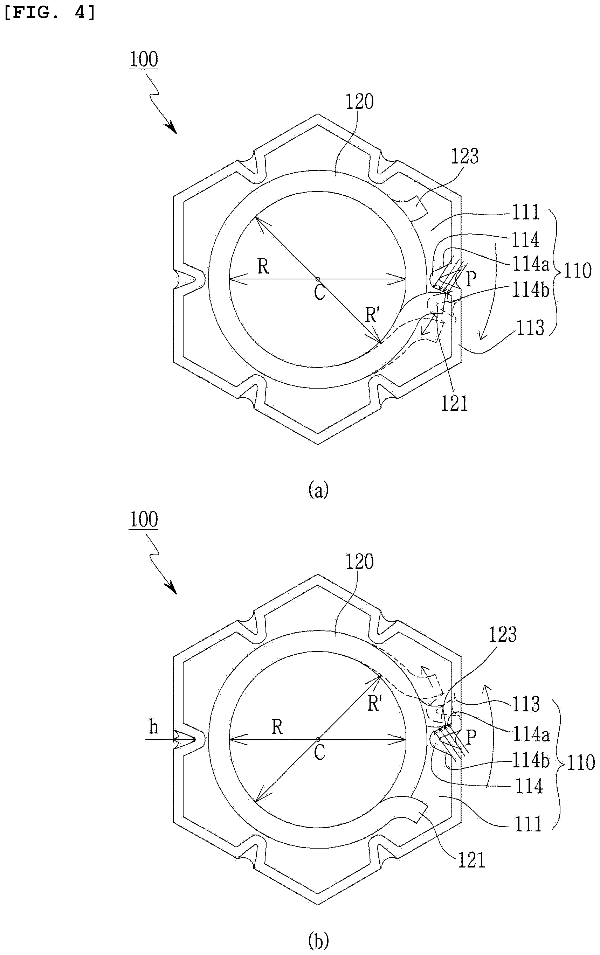

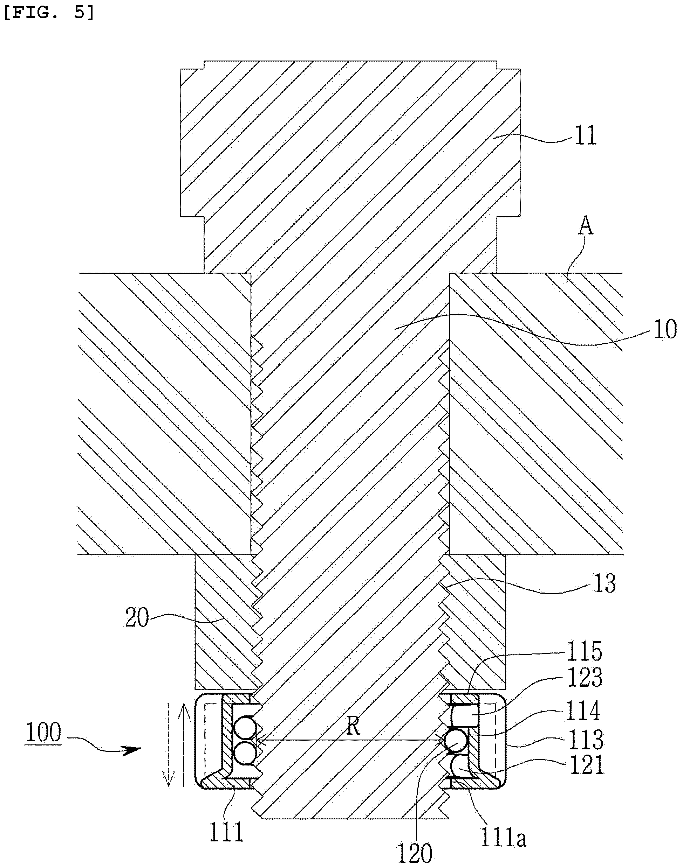

FIG. 1 is a skew drawing illustrating the anti-loosening spring nut 100 according to a preferred embodiment of the present invention, fastened to a bolt 20 together with a nut 10, FIG. 2 is a skew drawing illustrating the elements of the anti-loosening spring nut, FIG. 3 is an exploded skew drawing illustrating separately the elements of the anti-loosening spring nut 100, and FIG. 4 is a side section illustrating the cross section of the anti-loosening spring nut 100, and FIG. 5 is an exemplary plan drawing illustrating the acting mechanism of the anti-loosening spring nut 100.

As illustrated in FIG. 1, the anti-loosening spring nut 100 of the present invention is fastened to a bolt 10, in contact with the bottom face of a nut 20 fastened to said bolt 10, thereby preventing rotation of the bolt 10, keeping the bolt 10 and nut 20 from becoming loose, and stably keeping the bolt 10 and nut 20 fastened for an extended period of time.

The anti-loosening spring nut 100, as illustrated in FIG. 2, comprises an enclosure-shaped external casing 110, and a female thread spring 120 which is accommodated within the external casing 110.

The periphery of the external casing 110, which accommodates the female thread spring 120, is rotated in the forward and reverse directions by a standard tool, causing the female thread spring 120 to become fastened to or loosened from the bolt 10. As the external casing 110 accommodates the female thread spring 120, a worker needs only manipulate the external casing 110 in the forward and reverse directions using standard tools in the same manner as an ordinary nut. By virtue of this advantage, the tool adaptability of the anti-loosening spring nut 100 is enhanced, providing the benefit of being able to quickly fasten the anti-loosening spring nut 100 to a bolt 10.

The female thread spring 120 is screw-coupled to the male threads 13 of the bolt 10 when the external casing 110 is rotated, preventing loosening of the bolt 10. The female thread spring 120 is formed by winding a number of times to have an inner radius R which corresponds to the female threads of the bolt 10.

Whereas the female thread spring 120 according to a preferred embodiment of the present invention is provided in a form wound 2 times, this is but a single embodiment, and the female thread spring 120 may be provided in a form wound 1 time only or wound 3 times or more as needed.

At the upper portion and lower portion of the female thread spring 120 are respectively provided an upper catching loop end 121 and a lower catching loop end 123, which project outward from a radial direction. The upper catching loop end 121 and the lower catching loop end 123 are formed by bending in directions opposite each other.

The external casing 110, as illustrated in FIG. 3, comprises a bottom plate 111, a side face 113 formed perpendicularly to the periphery of the bottom plate 111, and a plurality of covering wings 115 which are foldable coupled to the top edge of the side face 113.

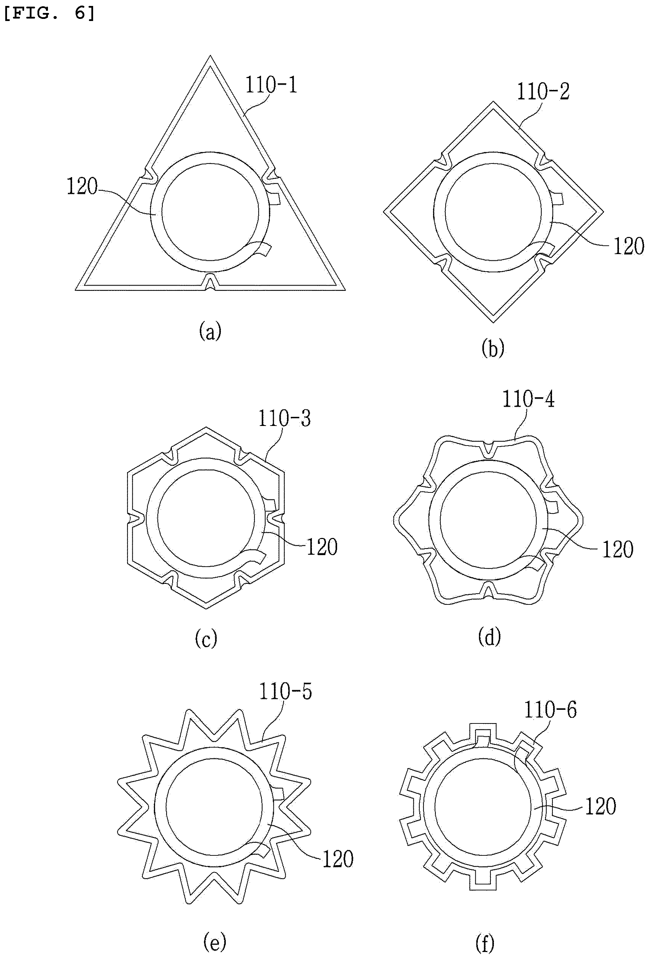

Here, preferably, the cross section of the external casing 110 is formed in a polygonal shape to allow for rotation using a standard tool, for example a spanner, wrench, electric screwdriver, nut runner, and the like. Accordingly, the external casing 110 may be provided in a triangular shape as illustrated in (a) of FIG. 6, in a square shape as illustrated in (b) of FIG. 6, in a hexagonal shape as illustrated in (c) of FIG. 6, or in various other shapes having corners which can be gripped by a standard tool, as illustrated in (d) through (e) of FIG. 6.

The bottom plate 111 is formed to have a polygonal shape, with a bolt insertion hole 111a for insertion of a bolt 10 formed on the plate face with an external diameter corresponding to that of the bolt 10.

The covering wings 115 are provided at the upper edge of the side faces 113 in a number corresponding to the number of edges of the polygon, and are folded about a crease 115a to cover the top of the external casing 110 accommodating the female thread spring 120 and secure the position of the female thread spring 120 in place.

As illustrated in FIG. 5, the covering wings 115 are provided to come into close contact with the top of the female thread spring 120, so that the position of the female thread spring 120 within the external casing 110 is secured in place and unable to move up or down.

Between adjacent covering wings 115, a cutout 115b is formed at the corner so that the covering wings 115 do not interfere with each other when folded in about the crease 115a.

Each covering wing 115 is provided to have an area such that allows for a space corresponding to the outer diameter of the bolt insertion hole 111a to be formed when a plurality of the covering wings 115 is folded inward, as illustrated in FIG. 1.

The side faces 113 are provided to have a polygonal shape, and a height to allow for the spring female screw 120 to be accommodated within the external casing 110. In a central region of the polygon forming each side face 113, a pushing projection 114 is depressedly formed inward. The depression depth h of the pushing projection 114, as illustrated in (a) and (b) of FIG. 4, is a depth that allows for a plurality of the pushing projections 114 to press against the periphery of the spring female screw 120, causing the spring female screw 120 to become aligned at the center of the external casing 110.

The depression depth h of the pushing projection 114 is determined with consideration for the outer diameter of the female thread spring 120 and the width of the external casing 110.

When the external casing 110 is rotated using a standard tool, the pushing projection 114 pushes against the upper catching loop end 121 or the lower catching loop end 123 of the female thread spring 120, causing the female thread spring 120 to turn together with the external casing and thereby become fastened to or loosened from the bolt 10.

The pushing projection 114, as illustrated in (a) of FIG. 4, is formed by bending to have a triangular cross section. One of a plurality of pushing projections 114 is positioned between the upper catching loop end 121 and the lower catching loop end 123.

The left slope 114b and right slope 114a of the pushing projection 114 positioned between the upper catching loop end 121 and the lower catching loop end 123 push the upper catching loop end 121 or the lower catching loop end 123, depending on the direction in which the external casing 110 is rotated.

For example, (a) of FIG. 4 is an exemplary drawing illustrating a process by which the anti-loosening spring nut 100 is fastened to a bolt 10 in a case where the bolt 10 is right-threaded, and the female thread spring 120 is screw-coupled to the male threads of the bolt 10.

After the bolt 10 has been inserted into the object being fastened A, a nut 20 is fastened to the bottom of the bolt 10. A worker fastens the anti-loosening spring nut 100 using a standard tool to the portion of the bolt 10 projecting downward beyond the nut 20.

As illustrated, when the standard tool grips a side face 113 and rotates the external casing 110 in the clockwise direction 110, the left slope 114b of the pushing projection revolves and presses against the upper catching loop end 121. Due to a pressure P applied by the left slope 114b on the upper catching loop end 121, the upper catching loop end 121 is pushed outward in the clockwise direction.

Thereby, an internal diameter R' of the female thread spring 120, as indicated by the dotted line, becomes larger than the initial internal diameter R. Accordingly, the friction between the portion of the female thread spring 120 in contact with the male threads 13 and their roots is decreased, allowing the anti-loosening spring nut 100 to ride along the male threads 13 and become fastened to the bottom face of the nut 20 as illustrated in FIG. 5.

Once the anti-loosening spring nut 100 is fastened to the bolt 10 in close contact with the nut 20 in this manner, the female thread spring 120 maintains its initial internal diameter R, and stays coupled to the male threads 13 of the bolt 10.

Here, when an external force acts on the bolt 10 or nut 20 in a loosening direction due to vibration or impact, the same force acts on the female thread spring 120 coupled to the bolt 10 as well in a loosening direction. Here, as the external casing 110 is secured in position, the female thread spring 120 rotates in the counterclockwise direction, as illustrated in (a) of FIG. 4, and the upper catching loop end 121 presses against the left slope 114b of the pushing projection 114.

As the force with which the upper catching loop end 121 presses against the pushing projection 114 is less than the torque applied by the standard tool, upper catching loop end 121 of the female thread spring 120 moves toward the lower catching loop end 123, reducing the internal diameter and increasing the friction between the contact area between the male threads and roots of the bolt 10. Accordingly, loosening of the bolt 10 or nut 20 is prevented.

Meanwhile, in a case where a force is applied in the counterclockwise direction to the external casing 110 using a standard tool in order to unfasten the bolt 10 or nut 20, as illustrated in (b) of FIG. 4, the right slope 114a of the pushing projection 114 presses against the lower catching loop end 123, expanding the internal diameter R' of the female thread spring 120 and allowing the anti-loosening spring nut 100 to be readily unfastened from the bolt 10.

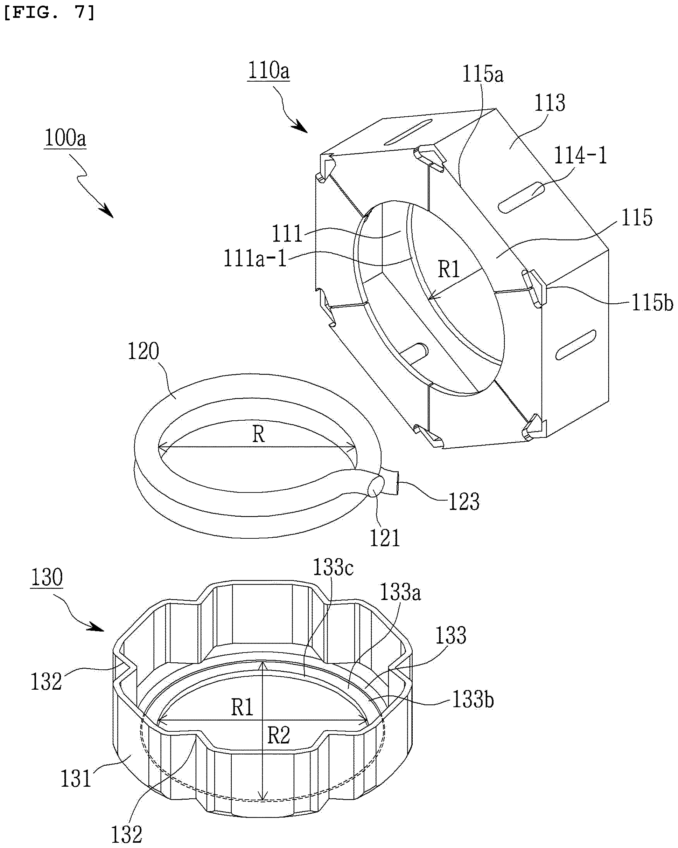

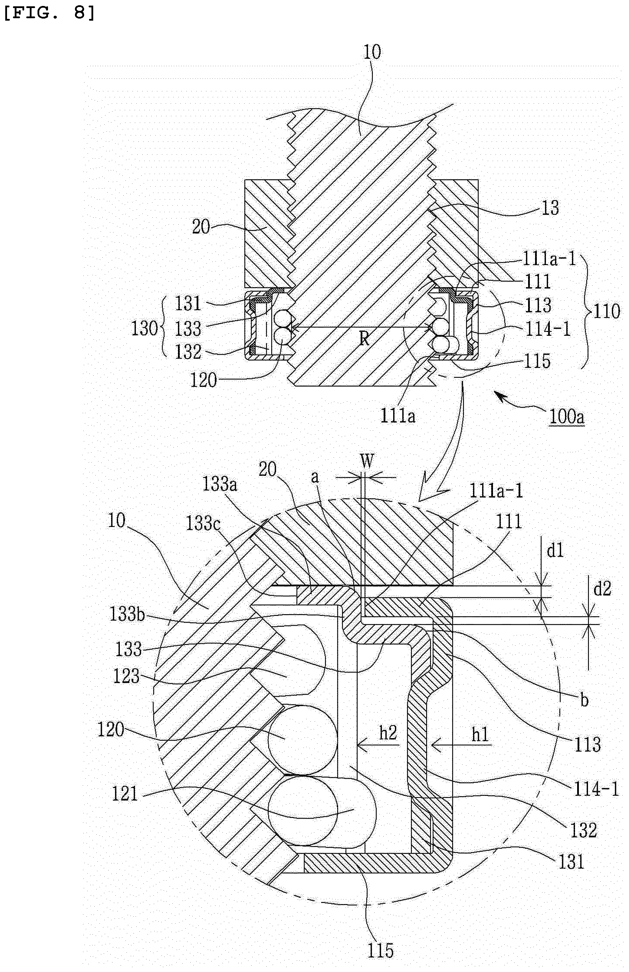

FIG. 7 is an exploded skew drawing illustrating separately the elements of the anti-loosening spring nut 100a according to a second embodiment of the present invention, and FIG. 8 is a side section illustrating the cross section of the anti-loosening spring nut 100a according to a second embodiment of the present invention when fastened to a bolt 10 together with a nut 20.

As illustrated, the anti-loosening spring nut 100a according to a second embodiment of the present invention comprises a ratchet external casing 110a, and an internal casing 130 which is accommodated within the ratchet external casing 110a and which itself accommodates a female thread spring 120.

The anti-loosening spring nut 100a of the second embodiment, when compared to the anti-loosening spring nut 100 of the first and preferred embodiment, further comprises an internal casing 130. Thereby, the anti-loosening spring nut 100a is fastened beneath a nut 20 using an electric tool such as a rechargeable electric screwdriver or a nut runner, and the ratchet external casing 110a spins without traction beyond a tightening torque limit, providing a benefit of further improved tool adaptability.

As the female thread spring 120 of the second embodiment has the same elements as that of the first and preferred embodiment, detailed description thereof will be omitted hereafter.

Whereas the ratchet external casing 110a has a structure identical to the external casing 110 of the first and preferred embodiment, the depression depth of the short pushing projection 114-1 formed on the side face 113 is less than that of the pushing projection 114. Further, whereas the bolt insertion hole 111a formed on the bottom plate 111 of the anti-loosening spring nut 100 of the first and preferred embodiment is formed to correspond to the outer diameter of the bolt 10, the hub insertion hole 111a-1 formed on the bottom plate 111 of the anti-loosening spring nut 100a according to the second embodiment is formed to have a diameter R1 greater than that of the bolt insertion hole 111a.

The internal casing 130 is accommodated within the external casing 110, and itself accommodates the female thread spring 120. The internal casing is formed in the shape of an enclosure whose top is open, and comprises an internal casing wall 131 and a bearing floor plate 133.

The internal casing wall 131 may be formed in various shapes such as circular or polygonal, insofar as it is able to accommodate the female thread spring 120. Along the face of the internal casing wall 131 are provided a plurality of receiving projections 132 which are depressedly formed inward in a number and at intervals corresponding to the short pushing projections 114-1.

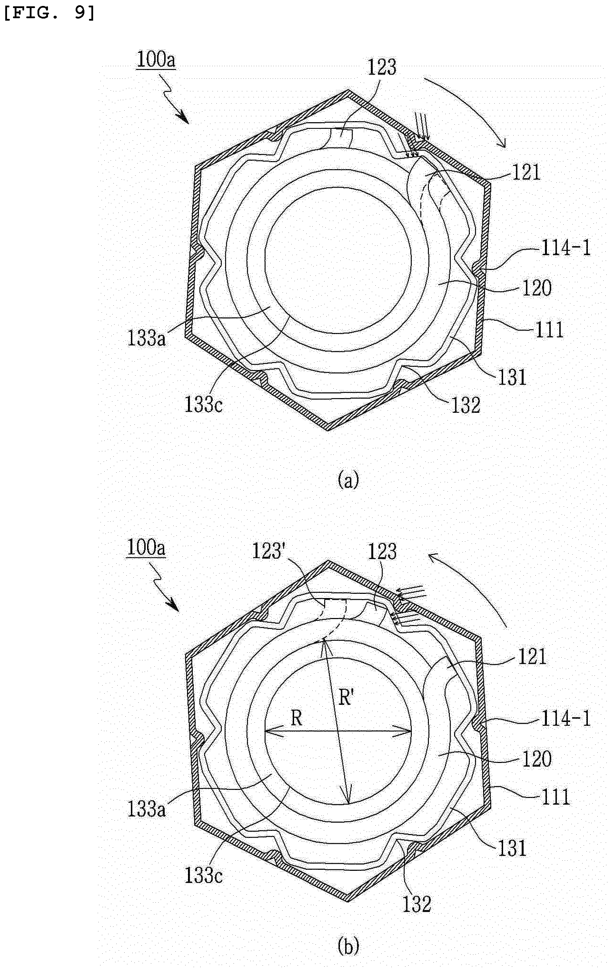

The plurality of receiving projections 132, as illustrated in (a) of FIG. 9, are projectingly formed toward the periphery of the female thread spring 120, supporting the female thread spring 120 so that the female thread spring 120 may be aligned with the centers of the ratchet external casing 110a and the internal casing 130.

As illustrated in (a) and (b) of FIG. 4, the receiving projection 132 is pressed against by the short pushing projection 114-1 when the ratchet external casing 110a is rotated in the forward or reverse direction using a standard tool, and in turn presses against the upper catching loop end 121 or the lower catching loop end 123 of the female thread spring 120. This causes the upper catching loop end 121 and the lower catching loop end 123 to be spread apart, expanding the inner diameter R' of the female thread spring 120 relative to the initial inner diameter R and facilitating fastening to or loosening from the bolt 10.

The bearing floor plate 133 is disposed to overlap the bottom plate 111 of the ratchet external casing 110a. The bearing floor plate 133 is formed with a surface area allowing for overlapping the bottom plate 111.

Inside the bearing floor plate 133, a projecting hub 133a which is exposed outward through the hub insertion hole 111a-1 of the bottom plate 111 is steppedly formed. The projecting hub 133a, as in the magnified illustration of FIG. 8, is formed to steppedly extend from the bearing floor plate 133 by the height of a step 133b, and projects out of the hub insertion hole 111a-1 by a certain distance d1.

Here, a gap of a certain height d2 is formed between the bearing floor plate 133 and the bottom plate 111, and a gap of a certain height W is formed between the hub insertion hole 111a-1 and the projecting hub 133a as well.

The external diameter R1 of the hub insertion hole 111a-1 is formed to be identical to the internal diameter R1 of the bearing floor plate 133, and the internal bolt insertion hole 133c formed on the projection hub 133a is formed to have a diameter corresponding to the external diameter of the bolt 10.

The corner a between the projecting hub 133a and step 133b, and the corner b between the internal casing wall 131 and the bearing floor plate 133 are formed as curved faces. This shape of the bearing floor plate 133 and projecting hub 133a is intended to minimize friction between the ratchet external casing 110a and the projecting hub 133a and bearing floor plate 133 once the anti-loosening spring nut 100a has been fastened beneath the nut 20, allowing the rachet external casing 110a to spin without traction.

Here, as magnified in FIG. 8, the depression depth h1 of the short pushing projection 114-1 is less than the depression depth h2 of the receiving projection 132. Specifically, the short pushing projection 114-1 is formed to a depth such that, in a state where the anti-loosening spring nut 100a has been fastened beneath the nut 20 and the projecting hub 133a is in contact with the bottom face of the nut 20 (that is, after the tightening torque limit has been reached by rotating the anti-loosening spring nut 100a with a tool), if torque in the fastening direction continues to be applied by the tool, the short pushing projection 114-1 can pass over and move beyond the receiving projection 132.

In a case where the anti-loosening spring nut 100a according to the second embodiment of the present invention is fastened to a bolt 10, as illustrated in (a) of FIG. 9, when the ratchet external casing 110a is rotated in a clockwise direction by a tool, the short pushing projection 114-1 pushes against the receiving projection 132 of the internal casing 130, and the receiving projection 132 presses against the upper catching loop end 121. This expands the female thread spring 120 and increases its external diameter, reducing friction with the bolt 10 to allow for fastening to the bolt 10.

As illustrated in FIG. 8, when the anti-loosening spring nut 100a is fastened beneath the nut, and the projecting hub 133a comes into close contact with the bottom face of the nut 20, axial force increases, in turn increasing the friction acting between the projecting hub 133a and the bottom face of the nut 20, and causing the internal casing to be secured in place without rotating further.

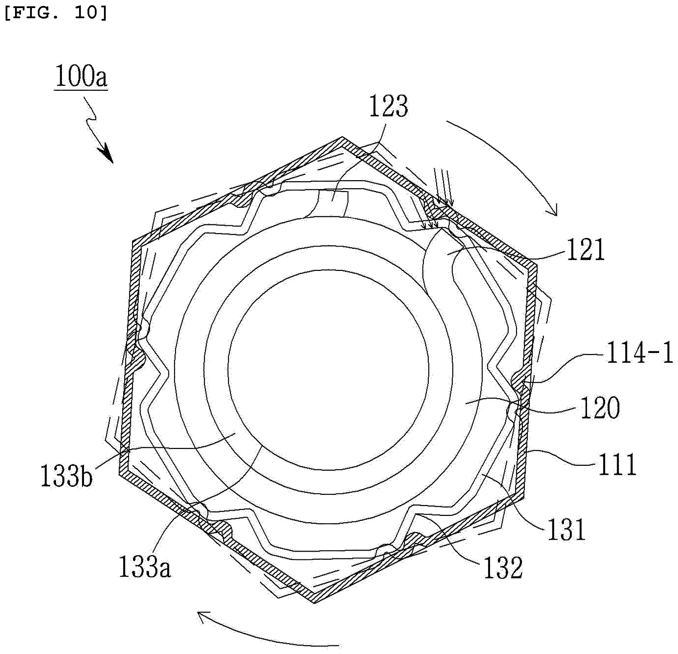

If, with the internal casing 130 secured in place in this manner, torque from the tool continues to be applied, the short pushing projection 114-1 passes over the receiving projection 132, as illustrated in FIG. 10, causing the ratchet external casing 110a to spin without traction around the external casing 130.

Here, as illustrated in FIG. 8, the projecting hub 133a is in close contact with the bottom face of the nut 20, securing the internal casing 130 in position, while the ratchet external casing 110a is separated from the projecting hub 133a and the hub insertion hole 111a-1 by a gap W and from the bearing floor plate 133 and bottom plate 111 by a gap d2. Therefore, the ratchet external casing 110a performs a ratchet function wherein the ratchet external casing 110a spins without traction as the the short pushing projection 114-1 passes over the receiving projection 132.

By virtue of this ratchet function, a benefit is provided in that a worker is able to quickly fasten the anti-loosening spring nut 100a to a bolt 10.

Meanwhile, in a case where the anti-loosening spring nut 100a of the present invention fastened to a bolt 10 is being loosened from said bolt 10, when torque is applied in a counterclockwise direction by a tool as illustrated in (b) of FIG. 9, the short pushing projection 114-1 pushes against the receiving projection 132, then the receiving projection 132 pushes against the lower catching loop end 123, expanding the outer diameter of the female thread spring 120 and allowing for loosening from the bolt 10.

As examined in the above, the anti-loosening spring nut according to the present invention accommodates a female thread spring used to prevent loosening of a bolt within an external casing which can be manipulated using a standard tool, and pushing projections formed on the inner wall faces of the external casing push against an upper catching loop end and a lower catching loop end of the female thread spring, causing the external casing to become fastened to or loosened from the bolt.

By virtue of this arrangement, the present invention has the advantage of being able to be fastened quickly to a bolt using a standard tool while maintaining the anti-loosening function of a female thread spring.

Further, the anti-loosening spring nut of the present invention provides a ratchet function by adding an internal casing and providing a receiving projection which is pushed against by a pushing projection, causing the external casing to spin without traction once the anti-loosening spring nut has been fastened beneath the nut. By virtue of this arrangement, the present invention has enhanced adaptability to standard tools, providing the benefit of faster installation.

The embodiments of the anti-loosening spring nut of the present invention described in the above are intended to be exemplary only, and a person skilled in the art shall understand that various modified and equivalent other embodiments are also possible. Therefore, it shall be understood that the present invention is not limited to the forms mentioned in the foregoing detailed description. Accordingly, the true scope of technical protection sought by the present invention shall be determined by the technical idea presented in the appended claims. Further, the present invention shall be understood as including the idea of the invention as defined by the appended claims, and all modifications, equivalents and substitutions within the scope of said idea.

**(Explanation of Symbols)**

| | | | |
|---|---|---|---|
| 10 : | Bolt | 11 : | Bolt head |
| 13 : | Screw thread | 20 : | Nut |
| 100 : | Anti-loosening spring nut | 110 : | External casing |
| 110a : | Ratchet external casing | 111 : | Bottom plate |
| 111a : | Bolt insertion hole | 111a-1 : | Hub insertion hole |
| 113 : | Side face | 114 : | Pushing projection |
| 114-1 : | Short pushing projection | 114a : | Right slope |
| 114b : | Left slope | 115 : | Covering wing |
| 115a : | Crease | 115b : | Cutout |
| 120 : | Female thread spring | 121 : | Upper catching loop end |
| 123 : | Lower catching loop end casing | 130 : | Internal |
| 131 : | Internal casing wall | 132 : | Receiving projection |
| 133 : | Bearing floor plate | 133a : | Projecting hub |
| 133b : | Step | 133c : | Internal bolt insertion hole |

### Industrial Applicability

The present invention as industrial applicability for coupling two objects by fastening in various fields including general industrial machinery, such as assembly of automotive components, assembly of electronic components, assembly of furniture, and assembly of structures at construction sites.

## Claims

1. An anti-loosening spring nut, comprising:
a female thread spring 120 which is wound a certain number of times along male threads of a bolt 10, and at whose lower portion and upper portion are projectingly formed, respectively, a lower catching loop end 123 and an upper catching loop end 121, at directions different from each other and outward in a radial direction, and;
an external casing 110 which has a shape of an enclosure accommodating the female thread spring 120, on a bottom plate 111 of which is penetratingly formed a bolt insertion hole 111a into which the bolt 10 is inserted, and along whose side face 113 are provided a plurality of pushing projections 114 which are depressedly formed inward at constant intervals,
and **characterized**:
**in that** the female thread spring 120 is accommodated within the external casing 110 in a manner such that the pushing projection 114 is disposed between the lower catching loop end 123 and the upper catching loop end 121, and;
**in that** when, with the nut 20 fastened to the bolt 10, torque is applied by a standard tool in a direction wherein the external casing 110 becomes fastened to the bolt 10, the pushing projection 114 comes in contact with and presses against the upper catching loop end 121, expanding an outer diameter of the female thread spring 120 and causing the external casing 110 and the female thread spring 120 to rotate together and become fastened to each other along the bolt 10.

2. The anti-loosening spring nut of Claim 1, wherein:
the external casing 110 comprises:
a side face 113 whose cross-section is formed in a polygonal shape to allow for use of a standard tool, and; a plurality of covering wings 115 which are folded inward from an upper edge of the side face 113 to cover the female thread spring 120,
and **characterized in that**:
the plurality of pushing projections 114 is formed depressedly inwards from each of the edge faces of the polygon, to a depth at which they cause the female thread spring 120 to become aligned at a center of the external casing 110, so that the female thread spring 120 may be screw-coupled to the male threads of the bolt 10.

3. The anti-loosening spring nut of Claim 2, wherein: when an external force is applied in a direction in which the bolt 10 or the nut 20 is loosened with the external casing 110 coupled to the bolt 10 beneath the nut 20, the upper catching loop end 121 comes into contact with the pushing projections 114 with the external casing 110 secured in place, reducing the outer diameter of the female thread spring 120 and preventing loosening of the bolt 10 or the nut 20.

4. An anti-loosening spring nut, comprising:
a female thread spring 120 which is wound a certain number of times along male threads of the bolt 10, and at whose lower portion and upper portion are projectingly formed, respectively, a lower catching loop end 123 and an upper catching loop end 121, at directions different from each other and outward in a radial direction;
a ratchet external casing 110a which has a shape of an enclosure accommodating the female thread spring 120, on a bottom plate 111 of which is penetratingly formed a hub insertion hole 111a-1 having an external diameter greater than the external diameter of the bolt 10, and along whose side face 113 are provided a plurality of short pushing projections 114-1 which are depressedly formed inward at constant intervals, and;
an internal casing 130 which is accommodated within the ratchet external casing 110a and which accommodates the female thread spring 120, and along whose side face 113 are provided a plurality of receiving projections 132 which are depressedly formed inward at intervals corresponding to the short pushing projections 114-1,
and **characterized in that**:
the female thread spring 120 is accommodated within the internal casing 130 in a manner such that the receiving projection 132 is disposed between the lower catching loop end 123 and the upper catching loop end 121, and; **in that** when, with the nut 20 fastened to the bolt 10, torque is applied by a standard tool in a direction wherein the external casing 110 becomes fastened to the bottom of the nut 20, the short pushing projection 114-1 presses against the receiving projection 132, and the receiving projection 132 comes in contact with and presses against the upper catching loop end 121, expanding an outer diameter of the female thread spring 120 and causing the female thread spring 120 to become fastened to the bolt 10.

5. The anti-loosening spring nut of Claim 4, wherein:
the internal casing 130 comprises:
an internal casing wall 131 on which the plurality of receiving projections 132 is formed;
a bearing floor plate 133 which is formed to project inward by a certain distance from the wall of the internal casing 130 in a direction parallel to the bottom edge of the wall to overlap the bottom plate 111, and;
a projecting hub 133a which is formed to project inward by a certain distance from the bearing floor plate 133 and project downward and outward through the hub insertion hole 111a-1, and on which is formed an internal bolt insertion hole 133c into which the bolt 10 is inserted,
and **characterized in that**:
the receiving projection 132 is formed depressedly inwards to a depth at which it causes the female thread spring 120 to become aligned at a center of the internal casing 130, so that the female thread spring 120 becomes screw-coupled to the male threads of the bolt 10.

6. The anti-loosening spring nut of Claim 5, **characterized in that**:
when a standard tool applies torque in a direction in which the nut 20 becomes fastened to the external casing 110 with the projecting hub 133a in contact with the bottom of the nut 20 fastened to the bolt 10, the short pushing projection 114-1 passes over the receiving projection 132, causing the external casing 110 to spin without traction about the projecting hub 133a and around the internal casing 130.
